# EUROPEAN PATENT SPECIFICATION

(11) **EP 3 851 000 B1**
(45) Date of publication and mention of the grant of the patent: **27.12.2023**
(21) Application number: 20864264.5
(22) Date of filing: 19.11.2020
(51) Int. Cl.: A47J 43/28, B65D 81/26, A23L 5/00, B65D 85/50

(54) **ABSORBENT SHEET, ABSORBENT SHEET ROLL, AND OIL ABSORPTION METHOD**
ABSORBIERENDES BLATT, ABSORBIERENDE BLATTROLLE UND ÖLABSORPTIONSVERFAHREN
FEUILLE ABSORBANTE, ROULEAU DE FEUILLES ABSORBANTES ET PROCÉDÉ D'ABSORPTION D'HUILE

(30) Priority: 21.11.2019 JP 2019210794
(43) Date of publication of application: 21.07.2021
(73) Proprietor: Kouda, Yasuo, Onga-cho, Onga-gun, Fukuoka (JP)
(72) Inventor: Kouda, Yasuo, Onga-cho, Onga-gun, Fukuoka (JP)
(74) Representative: Cioncoloni, Giuliana
(86) International application number: PCT/JP2020/043257
(87) International publication number: WO 2021/100821

(56) References cited:
- JP-A- H08 480
- JP-A- H08 480
- JP-A- H09 504 471
- JP-A- 2002 355 211
- JP-A- 2008 073 187
- JP-A- 2011 030 718
- JP-A- 2013 107 695
- JP-A- 2013 107 695
- JP-A- 2016 521 218
- JP-U- 3 163 077
- US-A1- 2014 134 374

## Description

### TECHNICAL FIELD

The present invention relates to an absorbent sheet, an absorbent sheet roll, and an oil absorption method, and more particularly to an absorption sheet or the like for removing droplets or liquid films attached to the surface of an object.

### BACKGROUND ART

As the health-oriented increases, a laying plate or the like for reducing the oil content of deep-fried food such as fried chicken for a consumer has been developed.

For example, Patent Document 1 discloses a paper-made laying plate for fried food such as port cutlet, menchi katsu, croquette, fried chicken, tempura, french-fried potato, and the like, which makes the oil-cutting of fried food easier (Patent Document 1). In addition, it has been proposed to place a plurality of kitchen paper under a parchment paper with a cut to wrap meat and fish (Patent Document 2).

### PRIOR ART LITERATURE

### PATENT DOCUMENT

Patent Document 1: Japanese Patent Application Laid-Open No. 2013-107695
Patent Document 2: Japanese Utility Model Registration 3163077

### SUMMARY OF THE INVENTION

### PROBLEM SOLVED BY THE INVENTION

However, the laying plate disclosed in Patent Document 1 is used to prevent the cut oil from adhering again to the fried food. This method is an inactive oil draining method in a sense that the oil is left to fall naturally.

In addition, the technique described in Patent Document 2 discloses the method in which meat and fish are wrapped by the parchment paper which "does not pass water and oil" (paragraph 0006) and the oil adhered to the meat and fish is absorbed by the kitchen paper via the cut of the parchment paper. This method is also inactive as the method disclosed in Patent Document 1.

It is therefore an object of the present invention to provide an absorbent sheet which is capable of positively removing droplets attached to the surface of an object more positively than a conventional technique used for oil cutting, and which can be used for foods.

### MEANS FOR SOLVING THE PROBLEM

The invention is defined in the appended claims.

### BRIEF DESCRIPTION OF THE DRAWINGS

FIG. 1 is a schematic diagram showing an outline of oil absorbent paper of embodiment 1;
FIG. 2 is a diagram showing a method of using oil absorbent paper.
FIG. 3 shows a result of comparison of three types of oil absorption methods.
FIG. 4 is a diagram showing a result of comparing an oil absorption amount with respect to three kinds of objects in which the standard has been unified.
FIG. 5 shows three cuts used in the experiment.
FIG. 6 is a diagram showing a result of comparison of the spread of the oil absorbent paper which is grabbed and rubbed into the three-dimensional shape.
FIG. 7 is a diagram showing a result of comparing the height of the oil absorbent paper which is grabbed and rubbed into the three-dimensional shape.
FIG. 8 is a diagram showing various examples of the cuts of the oil absorbent paper.
FIG. 9 is a diagram showing the relationship between the pitch of the cuts of the oil absorbent paper and the entanglement degree of the oil absorbent paper.
FIG. 10 is a diagram showing the relationship between the width of the edge of the cut edge of the oil absorbent paper and the entanglement degree of the oil absorbent paper.
FIG. 11 is a schematic diagram showing an outline of the oil absorbent paper of embodiment 2.
FIG. 12 is a diagram showing a second cut and a third cut of the oil absorbent paper.
FIG. 13 is a diagram illustrating a state in which a triangular pyramid-shaped object is wrapped with oil-absorbent paper 45.
FIG. 14 is a diagram showing various examples of first cuts and second cuts of oil absorbent paper.
FIG. 15 is a schematic diagram showing the outline of the oil absorbent paper of embodiment 3.
FIG. 16 is a schematic diagram showing an outline of the oil absorbent paper of embodiment 4.
FIG. 17 is a diagram showing the variations in the shape of the absorbent sheet.

### FORM FOR CARRYING OF THE INVENTION

The embodiments of the present invention will be described below with reference to the drawings. The embodiment of the present invention is not limited to the following examples.

### Embodiment 1

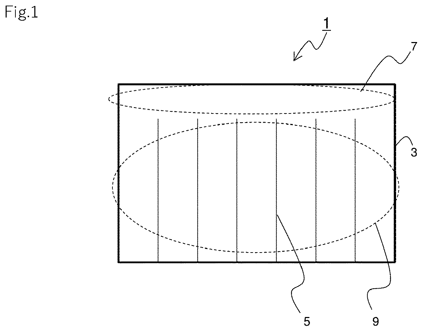

FIG. 1 is a schematic diagram showing an outline of an oil absorbent sheet 1 (an example of an "absorbent sheet" according to the present invention) according to the first embodiment of the present invention. The oil absorbent paper 1 sucks oil droplets and oil films attached to the surface of an object such as fried chicken, and is generally the size of a paper towel. The oil-absorbing paper 1 includes a sheet portion 3 (an example of a "sheet portion" of the present application) and a plurality of cuts 5. The sheet portion 3 has an edge portion 7 (an example of the "edge portion" in the present application) and a reed shape portion 9. Specifically, the oil absorbent paper 1 has a plurality of cuts 5 of the same length in the same direction leaving an edge 7 of about 1 cm. As a result, the oil absorbent paper 1 is a strip-like sheet having a width of about 1 cm connected at the edge 7. However, the cut lines 5 before use are connected by perforations.

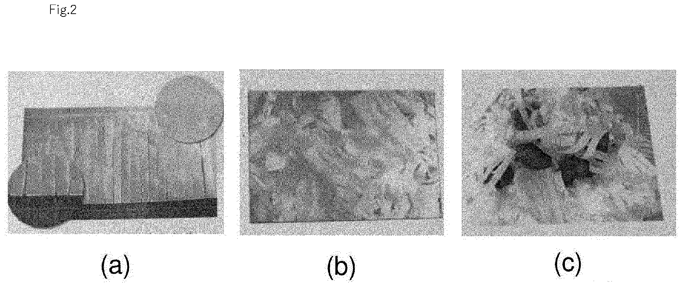

Referring now to FIG. 2, a method of using the oil absorbent paper 1 will be described. FIG. 2 is a diagram showing a method of using oil absorbing paper. As shown in FIG. 2 (a), the user disconnects the cut 5 prior to use of the oil absorbent paper 1. Subsequently, as shown in FIG. 2 (b), the oil absorbent paper 1 is made to be three-dimensional (hereinafter, referred to as a "three-dimensional configuration step") by grabbing and rubbing the oil-absorbing paper 1 and entwining the reed shape portion 9 made of a plurality of strips. Further, as shown in FIG. 2 (c), an object 11 such as fried chicken is put in the three-dimensional oil absorbent paper 1 to suck oil droplets or oil films attached to the surface of the object 11.

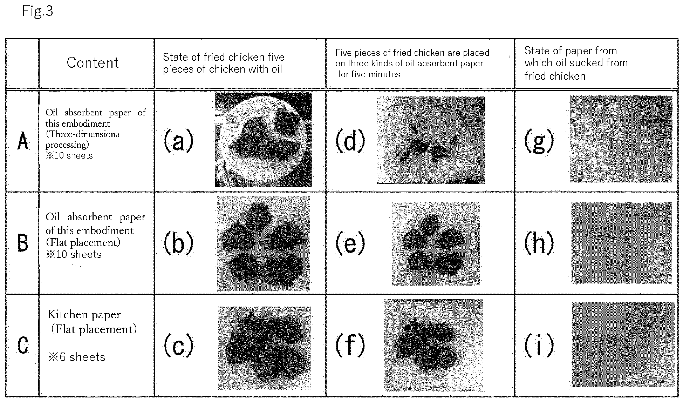

Referring now to FIG. 3, an experimental method in which the effect of the oil absorbent paper of this embodiment is confirmed will be described. FIG. 3 shows a comparison between three types of oil absorption methods. (1) Five pieces of fried chicken (FIG. 3 (a)-(c)). (2) Five pieces of fried chicken after 5 minutes left on 3 kinds of absorbent paper (FIG. 3 (d)-(f)). (3) The 3 kinds of absorbent paper including the absorbed oil after the five pieces of fried chicken are removed (FIG. 3 (g)-(i)).

Here, the three types of oil absorbent paper were the oil absorbent paper according to the present embodiment to which the three-dimensional process is applied, flat-placed oil absorbent paper, and flat-placed kitchen paper. "Flat-placed" means a planar state without passing through the three-dimensional process (three-dimensional process).

As the measurement, the weight of the oil absorbent paper before the oil is sucked, the weight of the oil absorbent paper after the oil is sucked, and the weight of the fried chicken are measured and recorded. Three types of oil absorption methods are measured for three times, respectively, and the average values thereof were used as the measurement results. The measurement results are shown in Table 1.

**[Table 1]**

| | Content | Weight of fried chicken (g) | Weight of oil absorbent paper before oil absorption (g) | Weight of oil absorbent paper after oil absorption (g) | Oil Absorption amount (g) | Oil absorption per Ig of fried chicken (mg) |
|---|---|---|---|---|---|---|
| A | Oil absorbent paper of this embodiment (Three-dimensional processing) 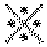 10 sheets | 158.3 | 21.6 | 25.0 | 3.4 | 21.5 |
| B | Oil absorbent paper (Flat placement) 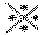 10 sheets | 174.8 | 22.0 | 23.8 | 1.8 | 10.3 |
| C | Kitchen paper (Flat placement) 6 sheets | 164.7 | 10.7 | 12.1 | 1.4 | 8.5 |

As shown in Table 1, by applying a three-dimensional process to the oil absorbent paper, oil absorption of more than twice as compared with the case of flat placement becomes possible. It may be because of increased contact with the object, such as fried chicken, because the oil absorbing paper is three-dimensional resulting in the increased number of capillarity action.

In addition, by having cuts in the oil absorbent paper, the degree of freedom in the three-dimensional coordination of the oil absorbent paper is increased, thereby increasing the spatial extent of expansion of the oil absorbent paper. As a result, it is considered that the object such as fried chicken is more easily buried in the oil absorbent paper, and the contact with the oil absorbent paper is increased.

The oil absorbent paper may be used to absorb water droplets of an object such as a fruit, or the like, other than oil absorption of frying oil. In addition, the absorbent paper may be used as an absorbent sheet for removing a droplet or a liquid film attached to the surface of the object.

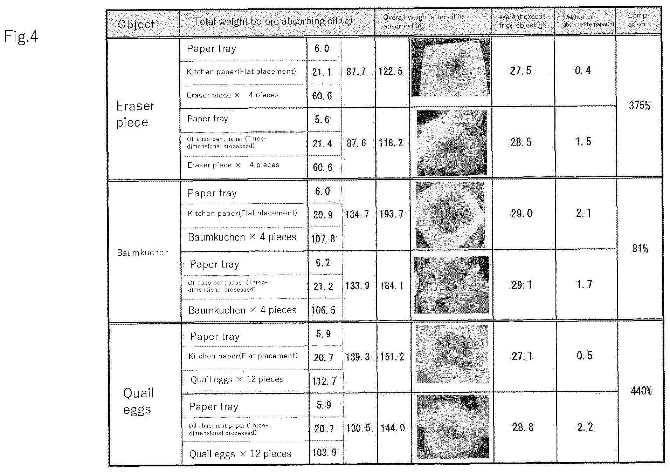

Since the sizes and shapes of the fried chickens are different from each other, the variation of the data is considered to be large. Therefore, an experimental method in which the effect of the oil absorbent paper of the present embodiment is confirmed by the object having a standard shape is described. As the measurement contents, the total weight before the oil is sucked, the total weight after the oil is sucked, the weight excluding the fried object were measured and recorded. Further, in three kinds of objects, the weight of oil sucked by the oil absorbent paper is calculated, and the result of the comparison is shown in FIG. 4.

As shown in FIG. 4, an object having a shape similar to a three-dimensional sphere such as an "eraser piece" and a "quail egg" has been subjected to a three-dimensional process to the oil absorbent paper, thereby making it possible to absorb oil four times or so as much as compared with the case of flat placement. However, Baumkuchen resulted in more oil absorption by flat oil-absorbing paper. This is thought to be due to the large contact area of the flat part. In the general shape, it is not always necessary to have a large flat part to contact a plate, and therefore, the experimental results of the "eraser piece" and the "quail egg" are considered to be more realistic.

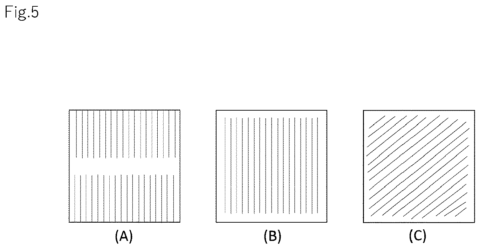

Next, an experimental method for confirming the effect of cut patterns which makes possible to form an absorbent sheet effectively into a three-dimensional shape when the oil absorbent paper is grabbed and rubbed is described. As shown in FIGS. 5 (A) to 5 (C), the oil absorbent paper having cuts as shown in FIGS. 5 (a)-(c) was grabbed and rubbed repeatedly for 20 seconds, and the spreading and height of the resulted oil absorbent paper were compared with each other. By the way, the rear drawings (bottom view) of the cut patterns to the oil absorbent paper shown in FIG. 5 are symmetric with the table drawing (plan view) and not shown.

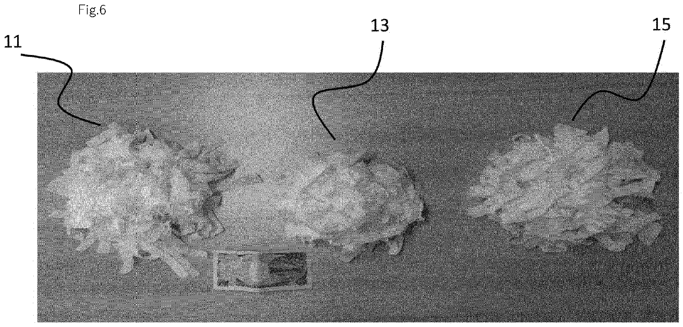

FIG. 6 shows a result of the comparison of the spread of the oil absorbent paper which is rubbed into the three-dimensional shape. As shown in FIG. 6, when the three-dimensional shape of FIG. 5 (A) is viewed from the upper part, the three-dimensional shape of FIG. 5 (A) is viewed from the upper part. The state (15) when the three-dimensional shape of FIG. 5 (A) is viewed from the upper part is hardly entangled with each other. However, when the three-dimensional shape of FIG. 5 (B) is viewed from the upper part, it can be seen that the oil-absorbing paper is entangled with each other.

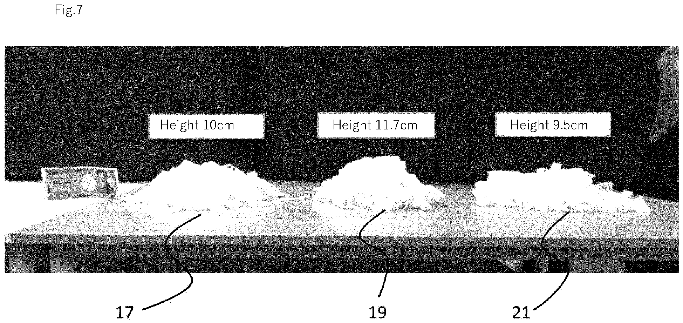

FIG. 7 shows a result of comparing the height of the oil absorbent paper that has been rubbed into the three-dimensional shape. As shown in FIG. 7, while the three-dimensional shape of FIG. 5 (a) is viewed from the side, the three-dimensional shape of FIG. 5 (a) and FIG. 5 (c) is viewed from the side, although the three-dimensional shape is formed, the height and density are relatively low. In comparison with that, the three-dimensional shape 19 of FIG. 5 (b) seen from the side is more condensed, and therefore, the height is also increased and the density is also increased.

For the reasons described above, it can be seen that the cut pattern of FIG. 5 (b) can form a three-dimensional shape which is not flatter than the cut pattern of FIG. 5 (a) or FIG. 5 (c) and is hard to be loosened.

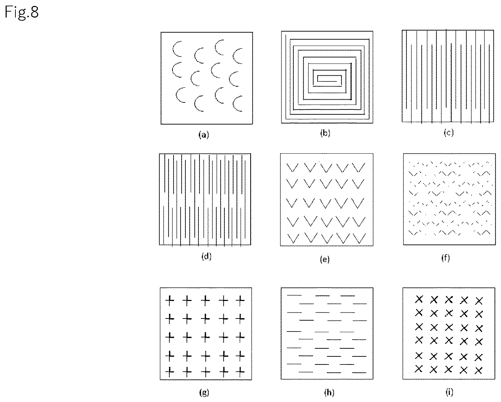

Further, the cut pattern to the oil absorbent paper may be shaped as shown in (a)-(i) in FIG. 8. Also, the rear drawing (bottom view) of the cut pattern to the oil absorbent paper shown in FIG. 8 is symmetric with the table drawing (plan view) and not shown.

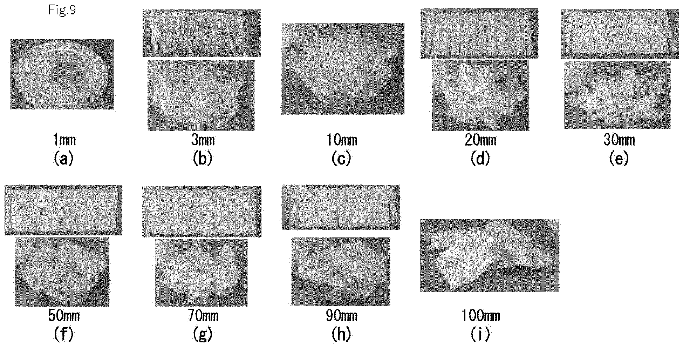

Next, with reference to FIG. 9, the results of consideration of the pitch of the cuts will be described. FIG. 9 is a diagram showing the relationship between the pitch of the cuts to the oil absorbent paper and the entanglement degree of the oil absorbent paper. The edges of the oil absorbent paper were unified to 1 cm.

As shown in FIG. 9 (a), when the pitch is set to 1 mm, the oil absorbent paper was not efficient as expected because the oil absorbent paper was not sufficiently inflated, so that the object is not sunk in the oil absorbent paper. Additionally, the oil absorbent paper was broken when the oil adheres to the oil absorbent paper. On the other hand, up to 2 mm to 9 cm, the oil absorbing paper exhibited a proper three-dimensional bulge. Therefore, it has been found from the present experiment that the pitch of the cuts is preferably 2 mm or more and 9 cm or less.

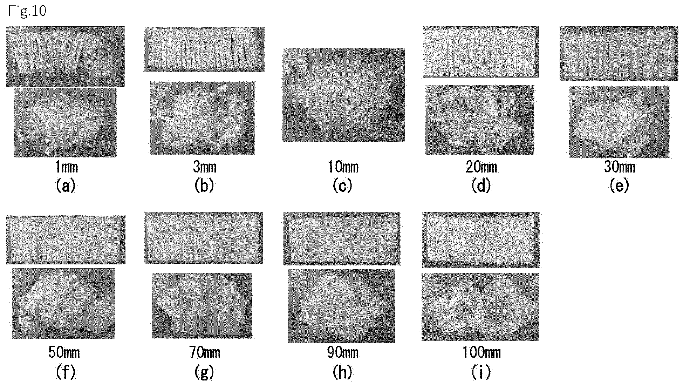

Further, with reference to FIG. 10, a discussion of the edge width will be described. FIG. 10 is a diagram showing the relationship between the width of the edge of the oil absorbent paper and the entanglement degree of the oil absorbent paper. The pitch of the cuts of the oil absorbent paper was unified to 1 cm.

As shown in FIG. 10 (h), when the edge width was as large as 41.9% of one side (about 21.5 cm), because the number of cuts were decreased and the lengths of the cuts were shortened, the oil absorbent sheets were not fully inflated three-dimensionally without tangling. On the other hand, when the width of the edge is 0.5 to 33% of one side, the oil absorbent paper is entangled with each other to gain a three-dimensional bulge.

In FIG. 9 and FIG. 10, the absorbent sheets are square-shaped and all four edges of the oil absorbent paper are left. However, the shape of the oil absorbent paper may be rectangular and only 1 -3 sides may be left.

The size of the oil absorbent paper may be standard size as commercially available general kitchen paper (horizontal 220 mm × vertical 230 mm) or may be other size.

The shape of the oil absorbent paper is not limited to square or rectangular, but may be circular, trapezoidal, parallelogram, or polygonal.

The oil absorbent paper may be an absorber other than paper. In view of the convenience of transportation, it is preferable to be in sheet shape with cuts so that strips can be easily entangled resulting in a three-dimensional shape.

In addition, the cut of the oil absorbent paper may be in different directions or different lengths.

In addition, the cuts of the oil absorbent paper is not limited to those to make a strip-shaped portion, but may be other cuts. It is preferable that the sheet parts are not separated even after the cut lines are cut off, it is easier to dispose the oil absorbent paper after use.

In addition, the oil absorbent sheet of the present embodiment may be provided as an oil absorbent sheet roll (one example of the "absorbent sheet roll" of the present application) connected by a cutting line. In addition, a plurality of oil absorbent sheets may be stored in one box without being connected like a general tissue paper.

### Embodiment 2

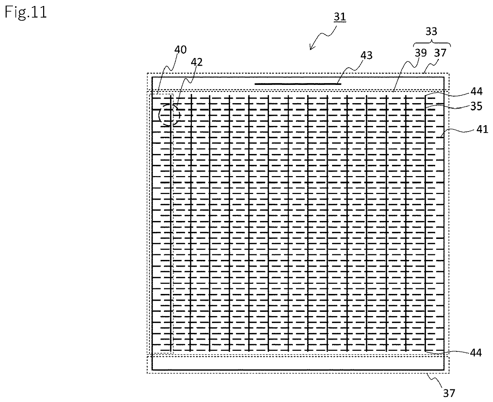

FIG. 11 is a schematic diagram showing an outline of an oil absorbent sheet 31 (an example of an "absorbent sheet" according to the present invention) according to the second embodiment of the present invention. The oil absorbent paper 31 is provided with a sheet portion 33 (an example of a "sheet portion" in the present application) as in embodiment 1 and a first cut 35 (an example of a "first cut" of the claim of the present application) corresponding to the cut 5 of Embodiment 1. As in Embodiment 1, the sheet portion 33 has an edge portion 37 (an example of the " edge portion " of the present application) and a reed shape portion 39. The reed shape portion 39 is composed of a plurality of areas, each of which is referred as an end collection portions 40. The end collection portion 40 is a region sandwiched between two lines segment-like first cuts 35 that are provided in the vertical direction with respect to the two sides of the edge 37, without being provided in the edge 37. The plurality of edge collection portions 40 are connected by edge portions 37 that are present across the reed shape portion 39.

The oil absorbent paper 31 further includes a second cut 41 (one example of the "second cut" of the claim of the present application) shorter than the first cut 35, and a third cut 43 (an example of the "third cut" of the claim of the present application). Specifically, the oil absorbent paper 31 is square, and a plurality of first cuts 35 having the same length in the vertical direction with respect to two sides of the edge 37 are provided, leaving edges 37 of about 1cm in two opposite sides of the oil absorbent paper 31. At least a part of the plurality of second cuts 41 is provided between the first cuts 35, and is connected to the first cut, and is provided normal to the first cut 35 in a staggered manner. Further, at least a part of the plurality of second cuts 41 is shorter than the length of the interval of the first cuts or is connected to only one of the first cuts. Here, "staggered" refers to a state in which each of the plurality of second cuts 41 facing each other in a way displaced from each other. Therefore, when the sheet portion 33 is pulled in the vertical direction with respect to the second cut 41, the sheet portion 33 spreads into a net shape. A plurality of second cuts are connected to two sides, provided in directions intersecting the second cut, of the sheet portion. Therefore, a large part of the net-like spreading part can be formed into a more three-dimensional expanded shape, and all the second cuts can be easily expanded in a net-like manner. The third cut 43 is provided in the direction perpendicular to the first cut 35 at the edge 37 near the side, perpendicular to the first cut 35, of the oil absorbent paper 31. As shown in FIG. 11, a plurality of second cuts 41 are connected to a line segment portion sandwiched between at least two end points of one first cut 35 to form a plurality of strips 42. Cuts and strips in a reed shape are necessarily provided because a plurality of second cuts 41 are connected to a line segment portion sandwiched between two end points of one first cut 35.

The sheet portion 33 is pulled in the vertical direction with respect to the second cut 41 so that the sheet portion 33 is spread into a net shape (one example of the "net-shape making step" of the claims of the present application). Then, the absorbent sheet can be three-dimensionally expanded by grabbing and rubbing the sheet portion 33 to let the reed shape portion 39 entwine. Further, it is possible to stabilize the three-dimensionally expanded shape because at least a portion of the second cuts 41 is hooked to an arbitrary portion of the sheet portion 33 such as the first cut 35, the side of the sheet portion 33, or another second cut 41(one example of the "three-dimensional configuration step" of the claims of the present application). In the three-dimensional configuration step, the first cut and the second cut are connected to form a plurality of strps, and therefore, three-dimensional configuration can be formed and facilitated because the second cuts are hooked to a part of the sheet part. As a result of forming a plurality of strips are formed by a plurality of first cuts 35 and a plurality of second cuts 41, the sheet portion 33 after being three-dimensionally shaped not only wraps the object from the outside but also comes into contact with the object even inside the three-dimensional shape. As a result, when the object is embedded in the expanded shape (one example of the "placing step" of the present application), the contact area with the oil absorbent paper 31 can be dramatically increased, and it is easy to remove the droplets and the liquid film attached to the surface. At the same time, the generation of a large number of strips promotes an irreversible change in the three-dimensional configuration with an increase in entropy. Therefore, it is easy to prevent the three-dimensional shape from being flattened.

Further, by inserting the edge 37 of the opposite side into the third cut 43, the object can be wrapped around without grabbing and rubbing the oil absorbent paper 31. As a result, it is easier to remove droplets or liquid films attached to the surface of the object.

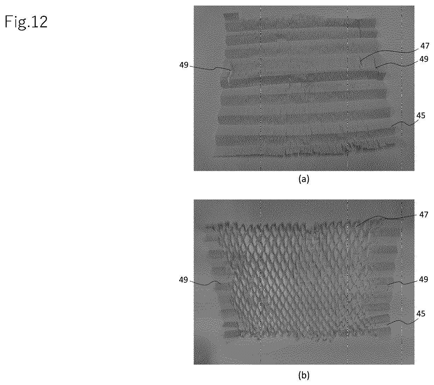

FIG. 12 is a view showing a second cut 47 and a third cut 49 of the oil absorbent paper 45, and FIG. 12 is a diagram showing a state in which the first cut is not provided. As shown in FIG. 12 (a), the second cut line 47 is provided in a staggered manner, and the third cut line 49 is provided so as to form two opposing line segments. When the oil absorbent paper 45 is pulled in the vertical direction with respect to the second cut 47, the oil absorbent paper 45 spreads in a net-like manner as shown in FIG. 12 (b).

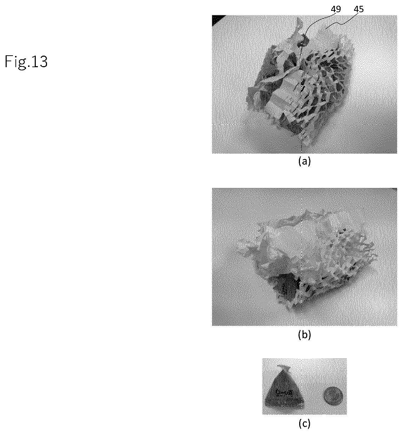

FIG. 13 shows a state in which triangular pyramid-shaped objects are wrapped with oil absorbent paper 45 as an example. As shown in FIG. 13 (a), when the two third cuts 49 are inserted into each other and fixed, 22 objects can be wrapped around by the oil absorbent paper 45. In addition, as shown in FIG. 13 (b), the oil absorbent paper is placed on the object, and the outside thereof is wrapped with one sheet of oil absorbent paper, so that the gap can be filled, and oil absorption can be further enhanced. FIG. 13 (c) is a diagram showing an object used as an example.

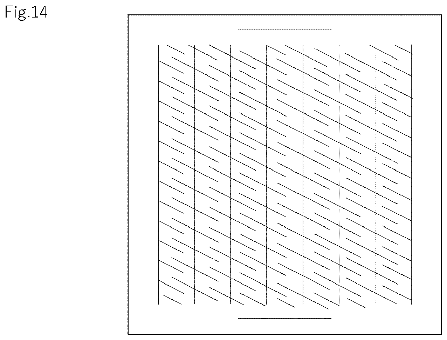

The pattern of the first cut, the second cut, and the third cut may be in the shape shown in (a)-(d) in FIG. 14. Also, the rear drawing (bottom view) of the cut pattern shown in FIG. 14 is symmetric with the table drawing (plan view) and not shown.

In the case where the second cut line is connected to the first cut line as shown in FIGS. 11 and 14, and when the second cut is provided so as to spread in the net shape, the second cut is easily entangled with a part of the sheet part, and the three-dimensionally expanded shape is easily maintained.

Further, the second cut is not limited in the vertical direction with respect to the first cut but may be provided obliquely to the first cut, for example, as shown in FIG. 14. In addition, as shown in FIG. 14, if the second cut is long enough to face another second cut, connected adjacent first cut, next to itself in a manner displaced from each other, the second cut is spread into a net-shape, so that the second cut is more easily entangled.

In addition, the third cut may be provided on the opposing edge portions as shown in FIG. 14 to form two opposing line segments.

### Embodiment 3

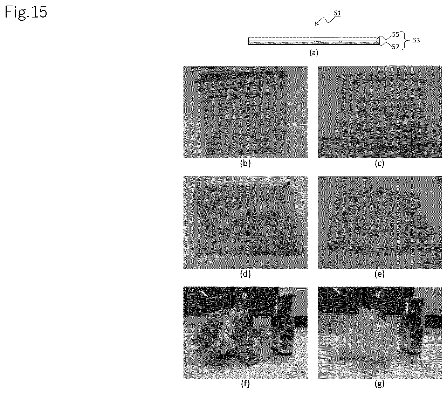

FIG. 15 (a) is a schematic diagram showing an outline of a cross section of the oil absorbent paper 51 according to the third embodiment of the present invention. The table drawing (plan view) of the oil absorbent paper 51 is similar to that of Embodiment 2.

The sheet portion 53 of the oil absorbent paper 51 is a two-layer structure of a first sheet 55 (an example of the "first sheet" of the present application) having a high absorbency and a second sheet 57 having a high rigidity (one example of the "second sheet" of the present application). The first cut, the second cut, and the third cut pass through the first sheet 55 and the second sheet 57.

The oil absorbent paper 51 has high absorbency and high rigidity without the use of special sheets with both high absorbency and high rigidity.

The first cut, the second cut, and the third cut may be provided only on either the first sheet 55 or the second sheet 57.

FIG. 15 (b) is a diagram showing an oil absorbent sheet comprising a first sheet having a high white absorbing property and a second sheet having a high brown rigidity; and FIG. 15 (c) is a diagram showing an oil absorbent sheet composed of two sheets of first sheets having high white absorbing properties. FIG. 15 (d) and (e) show the state in which the oil absorbent paper of (B) and (C) is pulled laterally and the second cut is spread; and (F) and (G) show the state in which the second cuts are intertwined and the oil absorbent paper is three-dimensionally expanded. When a second sheet of high rigidity is combined with the first sheet having high absorbency, the three-dimensional state in which the second cuts are entangled with each other is stabilized as shown in FIG. 15 (F). On the other hand, when two sheets of first sheets having high absorbency but low rigidity are used, the second cuts are entangled with each other, as shown in FIG. 15 (G), but partially gaps can be formed, and more likely to collapse than (F).

### Embodiment 4

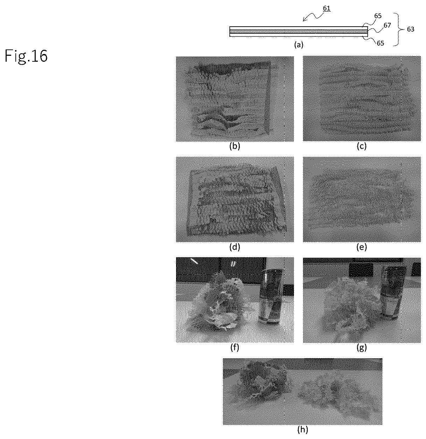

FIG. 16 (a) is a schematic diagram showing an outline of a cross section of the oil absorbent paper 61 according to the fourth embodiment of the present invention. The table drawing (plan view) of the oil absorbent paper 61 is similar to that of embodiment 2.

The sheet part 63 of the oil absorbent paper 61 is a three-layer structure laminated so as to sandwich a second sheet 67 having high rigidity by two first sheets 65 having a high sheet absorption property.

The oil absorbent paper 61 has both absorptivity and high rigidity as well as the oil absorbent paper 51 of embodiment 3. Furthermore, since the surface of the oil-absorbent paper 61 in contact with the object is always the first sheet 65 having high absorptivity, the user can use the sheet without worrying about the front and back of the absorbent sheet.

FIG. 16 (b) is a diagram showing an oil absorbent sheet comprising a first sheet of a first sheet having a high brown rigidity between two sheets of first sheets having a high white absorbing property; and FIG. 16 (c) is a diagram showing an oil absorbent sheet composed of three sheets of first sheets having a high white absorbing property. FIG. 16 (d) and (e) show a state in which the oil absorbent paper of (b) and (c) is pulled laterally and the second cut is spread, and (f) and (g) show a state in which the second cut lines are entangled with each other and the oil absorbent paper is three-dimensionally expanded. When a second sheet of high rigidity is combined with the first sheet having high absorbency, the three-dimensional state in which the second cuts are entangled with each other is stabilized as shown in FIG. 16 (F). On the other hand, when two sheets of first sheets having high absorbency but low rigidity are used, the second cuts are entangled with each other as shown in FIG. 16 (G), but the gaps are partially conspicuous. FIG. 16 (H) shows a state after a certain vibration is applied to the oil absorbent paper in the three-dimensional state shown in (F) and (G), and FIG. 16 (H) shows a state after a certain vibration is applied to the oil absorbent paper in the three-dimensional state shown in (F) and (G). (F) shows that it remains bulky even after the vibration is applied, and it is easy to stabilize the three-dimensional state.

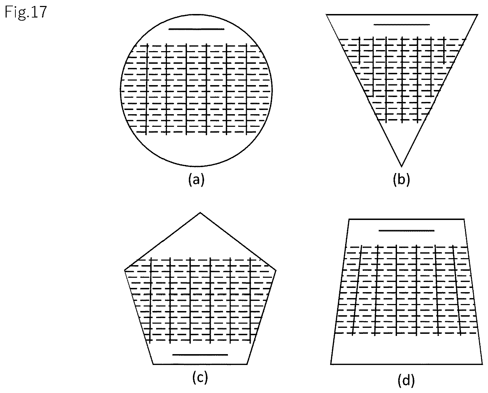

The shape of the oil absorbing paper is not limited to a square, but may be rectangular, trapezoidal, parallelogram, other polygonal shapes, or circular or elliptical shapes or other shapes. FIG. 17 is a diagram showing an example of an absorbent sheet of (a) a circular shape, (b) a triangle, (c) a pentagon and (d) a trapezoidal absorption sheet.

The first cut, the second cut, and the third cut are not limited to a simple straight line, but may be linear other than a straight line such as a curve, a wavy line or a zigzag line.

Further, the second cut may be weakly connected so as to form a perforation, for example, a perforation or the like so as to form a cut line when the user spreads into a net-shape.

The third cut may be provided on the oil absorbent paper as described in embodiment 2. For example, the third cut may be provided one by one so as to face each other across the strip.

1; Oil Absorbent Paper, 3; Sheet Portion, 5; Cut, 7; Edge Portion, 9; Reed Shape Portion, 11; the three-dimensional shape of FIG. 5 (A) viewed from the top, 13; the three-dimensional shape of FIG. 5 (B) viewed from the top, 15; the three-dimensional shape of FIG. 5 (C) viewed from the top, 17; the three-dimensional shape of FIG. 5 (A) viewed from the side, 19; the three-dimensional shape of FIG. 5 (B) viewed from the side, 21; the three-dimensional shape of FIG. 5 (C) viewed from the side,
31; Oil Absorbent Paper, 33; Sheet Section 35; First Cut, 37; Edge Portion, 39; Reed Shape Portion, 40; End Collection Portion, 41; Second Cut 42; Strip, 43; Third Cut, 44; End Point, 45; Oil Absorbent Paper, 47; Second Cut, 49; Third Cut, 50; First Cut, 51; Oil Absorbent Paper, 53; Sheet Portion, 55; First Sheet, 57; Second Cut, 61; Oil Absorbent Paper, 63; Sheet Portion, 65; First Sheet, 67; Second Sheet.

## Claims

1. An absorbent sheet (31, 51, 61) for removing a droplet or a liquid film attached to a surface of an object, comprising:
a sheet portion (33, 53, 63) in sheet form;
a plurality of first cuts (35) provided in the sheet portion (33);
a plurality of second cuts (41, 47) shorter than the first cuts (35) provided in a direction intersecting the first cuts (35);
an edge portion (37) provided near an edge of the sheet portion (33), in which the first cuts (35) are not provided; and
a reed shape portion (39) having a plurality of loose end aggregation portions (40), the portion (40) which is an area sandwiched between a couple of the first cuts (35) in line segment-like cut in a direction normal toward the edge portion (37), leaving the edge portion (37) uncut;
wherein the plurality of loose end aggregation portions (40) are connected at a plurality of the edge portions (37) which face each other across the reed shape portion (39);
wherein the plurality of the second cuts (41, 47) are provided between the first cuts (35); and
wherein a plurality of loose ends (42) are formed by connection of a plurality of the second cuts (41, 47) with a line segment portion between two edge points (44) of the first cut (35).

2. The absorbent sheet (31, 51, 61) according to claim 1, wherein the plurality of the second cuts (41, 47) are arranged in a staggered manner, so that the sheet portion (33, 53, 63)spreads in a net-shape when the sheet portion (33, 53, 63) is pulled in a direction perpendicular to the second cuts (41, 47).

3. The absorbent sheet (31, 51, 61) according to claim 2, wherein the plurality of the second cuts (41, 47) reach a side of the sheet portion (33, 53, 63) in a direction intersecting the second cut (41, 47).

4. The absorbent sheet (31, 51, 61) according to any one of claims 1 through 3, further comprising a third cut (43) provided in the edge portion (37) in a direction intersecting the first cuts (35).

5. The absorbent sheet (31, 51) according to any one of claims 1 through 4,
wherein the sheet portion (33, 53) has a plurality of sheets, that is, a first sheet (55) and a second sheet (57) with more rigidity than that of the first sheet (55),
wherein the first sheet (55) has higher absorbency than the second sheet (57);
wherein at least a portion of the first cuts (35) or the second cuts (41) penetrate the first sheet (55) and the second sheet (57).

6. The absorbent sheet (31, 61) according to claim 5, wherein a plurality of the first sheets (65) are stacked so as to sandwich the second sheet (67).

7. The absorbent sheet (31, 51, 61) according to any one of claims 1 through 6, wherein a shape of the sheet portion (33, 53, 63) is square, rectangular, trapezoidal, parallelogram, or other polygonal shape, or circular or elliptical shape.

8. An absorbent sheet (31, 51, 61) roll comprising a plurality of the absorbent sheet, according to any one of claims 1 through 7, connected via a cutting line.

9. An oil absorption method for absorbing an oil droplet or an oil film attached to a surface of a deep-fried food, including:
a three-dimensional configuration step of grabbing an absorbent sheet (31, 51, 61), according to any one of claims 1 through 6, to make the absorbent sheet (31, 51, 61) into a three-dimensional form with at least a portion of the second cuts (41, 47) hooked to another part of the sheet portion (33, 53, 63); and
a placing step of placing a deep-fried food on the absorbent sheet (31, 51, 61) in the three-dimensional form made in the three-dimensional configuration step.

10. The oil absorption method according to claim 9, further including, before the three-dimensional configuration step, a net-shape making step of pulling the sheet portion (33, 53, 63) of the absorbent sheet (31, 51, 61), according to any one of claims 3 through 6, in a direction perpendicular the second cuts (41, 47) to spread the sheet portion (33, 53, 63) into a net-shape.

## Patentansprüche

1. Ein absorbierendes Blatt (31, 51, 61) zum Entfernen eines Tropfens oder eines Flüssigkeitsfilms, das an einer Oberfläche eines Objekts angebracht ist, mit folgenden Merkmalen:
ein Blattabschnitt (33, 53, 63) in Blattform;
eine Vielzahl von ersten Schnitten (35), die in dem Blattabschnitt (33) angebracht sind,
eine Vielzahl von zweiten Schnitten (41, 47), die kürzer als die ersten Schnitte (35) sind und in einer Richtung angebracht sind, die die ersten Schnitte (35) kreuzt;
einen Randabschnitt (37), der in der Nähe eines Randes des Blattabschnitts (33) angebracht ist, in dem die ersten Schnitte (35) nicht angebracht sind; und
einen zungenförmigen Abschnitt (39) mit einer Vielzahl von losen Endanhäufungsabschnitten (40), wobei der Abschnitt (40) ein Bereich ist, der zwischen einem Paar der ersten Schnitte (35) in Liniensegmenten in einer Richtung senkrecht zu dem Randabschnitt (37) eingeschlossen ist, wobei der Randabschnitt (37) ungeschnitten bleibt;
wobei die Vielzahl loser Endanhäufungsabschnitte (40) mit einer Vielzahl von Randabschnitten (37) verbunden ist, die einander über den zungenförmigen Abschnitt (39) gegenüberliegen;
wobei die Vielzahl der zweiten Schnitte (41, 47) zwischen den ersten Schnitten (35) angebracht ist; und
wobei eine Vielzahl der losen Enden (42) durch Verbindung einer Vielzahl zweiter Schnitte (41, 47) mit einem Liniensegmentabschnitt zwischen zwei Randpunkten (44) des ersten Schnitts (35) gebildet werden.

2. Das absorbierende Blatt (31, 51, 61) nach Anspruch 1, wobei eine Vielzahl der zweiten Schnitte (41, 47) versetzt angeordnet ist, sodass sich der Blattabschnitt (33, 53, 63) netzförmig ausbreitet, wenn der Blattabschnitt (33, 53, 63) in einer Richtung senkrecht zu den zweiten Schnitten (41, 47) gezogen wird.

3. Das absorbierende Blatt (31, 51, 61) nach Anspruch 2, wobei eine Vielzahl der zweiten Schnitte (41, 47) versetzt angeordnet ist, sodass sich der Blattabschnitt (33, 53, 63) netzförmig ausbreitet, wenn der Blattabschnitt (33, 53, 63) in einer Richtung senkrecht zu den zweiten Schnitten (41, 47) gezogen wird.

4. Das absorbierende Blatt (31, 51, 61) nach einem der Ansprüche 1 bis 3, welches ferner einen dritten Schnitt (43) aufweist, der in dem Randabschnitt (37) in einer Richtung angebracht ist, die die ersten Schnitte (35) kreuzt.

5. Das absorbierende Blatt (31, 51) nach einem der Ansprüche 1 bis 4, wobei der Blattabschnitt (33, 53) eine Vielzahl von Blättern aufweist, d. h. ein erstes Blatt (55) und ein zweites Blatt (57) mit größerer Steifigkeit als die des ersten Blattes (55),
wobei das erste Blatt (55) eine höhere Saugfähigkeit aufweist als das zweite Blatt (57);
wobei mindestens ein Abschnitt der ersten Schnitte (35) oder der zweiten Schnitte (41) das erste Blatt (55) und das zweite Blatt (57) durchdringen.

6. Das absorbierende Blatt (31, 61) nach Anspruch 5, wobei eine Vielzahl der ersten Blätter (65) so gestapelt sind, dass sie das zweite Blatt (67) einschließen.

7. Das absorbierende Blatt (31, 51, 61) nach einem der Ansprüche 1 bis 6, wobei eine Form des Blattteils (33, 53, 63) quadratisch, rechteckig, trapezförmig, parallelogrammförmig oder eine andere polygonale Form oder eine kreisförmige oder elliptische Form ist,

8. Ein absorbierendes Blatt (31, 51, 61) auf einer Rolle, die eine Vielzahl von absorbierenden Blättern nach einem der Ansprüche 1 bis 7 umfasst, die über eine Schnittlinie verbunden sind.

9. Ein Verfahren zur Absorption eines Öltropfens oder eines Ölfilms, der an einer Oberfläche eines frittierten Lebensmittels haftet, einschließlich:
einen dreidimensionalen Konfigurationsschritt des Greifens eines absorbierenden Blattes (31, 51, 61) nach einem der Ansprüche 1 bis 6, um das absorbierende Blatt (31, 51, 61) in eine dreidimensionale Form zu bringen, wobei mindestens ein Abschnitt der zweiten Schnitte (41, 47) mit einem anderen Blattabschnitt (33, 53, 63) verbunden ist; und
einen Schritt des Ablegens eines frittierten Lebensmittels auf das absorbierende Blatt (31, 51, 61) in der dreidimensionalen Form, die in dem Schritt der dreidimensionalen Konfiguration hergestellt wurde.

10. Das Verfahren zur Absorption von Öl nach Anspruch 9, das ferner vor dem Schritt der dreidimensionalen Konfiguration einen Schritt zur Herstellung der Netzform einschließt, bei dem der Blattabschnitt (33, 53, 63) des absorbierenden Blattes (31, 51, 61) nach einem der Ansprüche 3 bis 6 in eine Richtung senkrecht zu den zweiten Schnitten (41, 47) gezogen wird, um den Blattabschnitt (33, 53, 63) in eine Netzform auszubreiten.

## Revendications

1. Une feuille absorbante (31, 51, 61) pour éliminer une gouttelette ou un film liquide fixé à une surface d'un objet, comprenant :
une partie feuille (33, 53, 63) sous forme de feuille ;
plusieurs premières découpes (35) prévues dans la partie feuille (33) ;
plusieurs secondes découpes (41, 47) plus courtes que les premières découpes (35) prévues de manière à recouper les premières découpes (35) ;
une partie bord (37) prévue à proximité d'un bord de la partie feuille (33), dans laquelle les premières découpes (35) ne sont pas prévues ; et
une partie en forme de roseau (39) comportant plusieurs parties d'agrégation d'extrémités libres (40), la partie (40) qui est une zone prise en étau entre deux des premières découpes (35) en forme de segment de ligne découpée dans une direction normale vers la partie bord (37), en laissant la partie bord (37) non découpée ;
dans laquelle plusieurs des parties d'agrégation d'extrémités libres (40) sont reliées à plusieurs parties bord (37) qui se font face à travers la partie en forme de roseau (39) ;
dans laquelle plusieurs des secondes découpes (41, 47) sont prévue entre les premières découpes (35) ; et
dans laquelle plusieurs extrémités libres (42) sont formées par connexion de plusieurs secondes découpes (41, 47) avec une partie en ligne de segment entre deux points de bord (44) de la première découpe (35).

2. La feuille absorbante (31, 51, 61) selon la revendication 1, dans laquelle plusieurs des secondes découpes (41, 47) sont disposées en quinconce, de sorte que la partie feuille (33, 53, 63) s'étend en une forme de filet lorsque la partie feuille (33, 53, 63) est étirée perpendiculairement aux secondes découpes (41, 47).

3. La feuille absorbante (31, 51, 61) selon la revendication 2, dans laquelle plusieurs des secondes découpes (41, 47) atteignent un côté de la partie feuille (33, 53, 63) d'une manière à recouper la seconde découpe (41, 47).

4. La feuille absorbante (31, 51, 61) selon l'une des revendications 1 à 3, comprenant en outre une troisième découpe (43) prévue dans la partie bord (37) d'une manière à recouper les premières découpes (35).

5. La feuille absorbante (31, 51) selon l'une des revendications 1 à 4,
dans laquelle la partie feuille (33, 53) comporte plusieurs feuilles, c'est-à-dire, une première feuille (55) et une seconde feuille (57) ayant une rigidité supérieure à celle de la première feuille (55),
dans laquelle la première feuille (55) a un pouvoir absorbant plus élevé que la seconde feuille (57) ;
dans laquelle au moins une partie des premières découpes (35) ou des secondes découpes (41) pénètre dans la première feuille (55) et la seconde feuille (57).

6. La feuille absorbante (31, 61) selon la revendication 5, dans laquelle plusieurs premières feuilles (65) sont empilées de manière à prendre en étau la seconde feuille (67).

7. La feuille absorbante (31, 51, 61) selon l'une des revendications 1 à 6, dans laquelle la forme de la partie feuille (33, 53, 63) est un carré, un rectangle, un trapèze, un parallélogramme ou une autre forme polygonale, ou une forme circulaire ou elliptique.

8. Un rouleau de feuilles absorbantes (31, 51, 61) comprenant plusieurs feuilles absorbantes, selon l'une des revendications 1 à 7, reliées via une ligne de découpe.

9. Un procédé d'absorption de l'huile pour absorber une gouttelette d'huile ou un film d'huile fixé à une surface d'un aliment frit, comprenant :
une étape de configuration en trois dimensions consistant à saisir une feuille absorbante (31, 51, 61), selon l'une des revendications 1 à 6, pour donner à la feuille absorbante (31, 51, 61) une forme en trois dimensions avec au moins une partie des secondes découpes (41, 47) accrochée à une autre partie de la partie feuille (33, 53, 63) ; et
une étape de placement consistant à placer un aliment frit sur la feuille absorbante (31, 51, 61) sous la forme en trois dimensions réalisée lors de l'étape de configuration en trois dimensions.

10. Le procédé d'absorption de l'huile selon la revendication 9, comprenant en outre, avant l'étape de configuration en trois dimensions, une étape de création d'une forme de filet consistant à tirer la partie feuille (33, 53, 63) de la feuille absorbante (31, 51, 61), selon l'une des revendications 3 à 6, perpendiculairement aux secondes découpes (41, 47) pour étendre la partie feuille (33, 53, 63) en forme de filet.
